# EUROPEAN PATENT SPECIFICATION

(11) **EP 1 724 465 B1**
(45) Date of publication and mention of the grant of the patent: **11.04.2012**
(21) Application number: 05719266.8
(22) Date of filing: 18.02.2005
(51) Int. Cl.: F02N 11/00, F02B 67/00, F02B 67/06, F02N 15/08, F16H 7/12

(54) **BELT DRIVEN-TYPE ENGINE STARTING DEVICE**
RIEMENANGETRIEBENE MOTORSTARTVORRICHTUNG
DISPOSITIF DE DÉMARRAGE MOTEUR DE TYPE ENTRAÎNÉ PAR COURROIE

(30) Priority: 19.02.2004 JP 2004042537
(43) Date of publication of application: 22.11.2006
(73) Proprietor: Kabushiki Kaisha Denso, Aichi 4488661 (JP); Bando Kagaku Kabushiki Kaisha, Hyogo-ku, Kobe-shi Hyogo 6520882 (JP)
(72) Inventor: Kamiya, Masaru, Kariya-shi, Aichi 4488661 (JP); Masaki, Kazuo, Kariya-shi, Aichi 4488661 (JP); Nagaya, Shuichi, Kobe-shi, Hyogo 6520882 (JP); Kiko, Hiroo, Kobe-shi, Hyogo 6520882 (JP); Kanazuru, Minoru, Kobe-shi, Hyogo 6520882 (JP)
(74) Representative: Knoblauch, Andreas
(86) International application number: PCT/JP2005/002547
(87) International publication number: WO 2005/080787

(56) References cited:
- DE-A1- 3 631 517
- DE-A1- 10 057 818
- JP-A- 7 259 965
- JP-A- 9 296 769
- JP-A- 2002 371 943
- JP-A- 2003 074 447
- US-A- 4 950 210

## Description

### FIELD OF THE INVENTION

The present invention relates to a device for starting an engine by rotating the crankshaft of the engine by means of an engine starter, a generator-motor or another electric motor and an engine-starting belt, an auxiliary machine belt or another friction drive belt. In particular, the invention relates to such a device suitable for an engine system that stops an engine automatically when the automobile stops for a traffic light or another reason, and that
starts the engine automatically to start the automobile when the traffic light changes.

### BACKGROUND OF THE INVENTION

Conventionally, an engine is started by being gear-driven by an engine starter. Specifically, only when the engine starter rotates, it is connected to the crankshaft of the engine by a starter gear so that the torque of the starter can be transmitted to the crankshaft to start the engine. In general, this operation is performed by the driver turning the engine key to the start position.

Recently, an engine system has been developed and used in the light of the tightened regulations of exhaust gas, reductions of fuel expenses, reductions of noises, etc. When the brake is applied to stop the automobile for a traffic light or another reason, this engine system stops the engine automatically.
When the brake is released, the engine system causes the engine starter to rotate automati cally,
starting the engine. As is the case conventionally, the engine system transmits the torque of the engine starter to the crankshaft of the engine through a starter gear. The transmission may make gear noises, which
are undesirable for the driver's feeling and the surrounding environment.

Therefore, it is proposed to start an engine by transmitting the torque of an electric motor to the crankshaft of the engine through a friction drive belt in place of a starter gear. This belt driving system makes the engine silent when the belt runs to start the engine. This system enables the engine to rotate and start smoothly.

A device (for example, patent document 1) is proposed as prior art relating to engine-starting devices of this type. In this device, a driving motor for starting an automobile engine and a generator for charging a battery or for another purpose are connected together via an overrunning clutch.

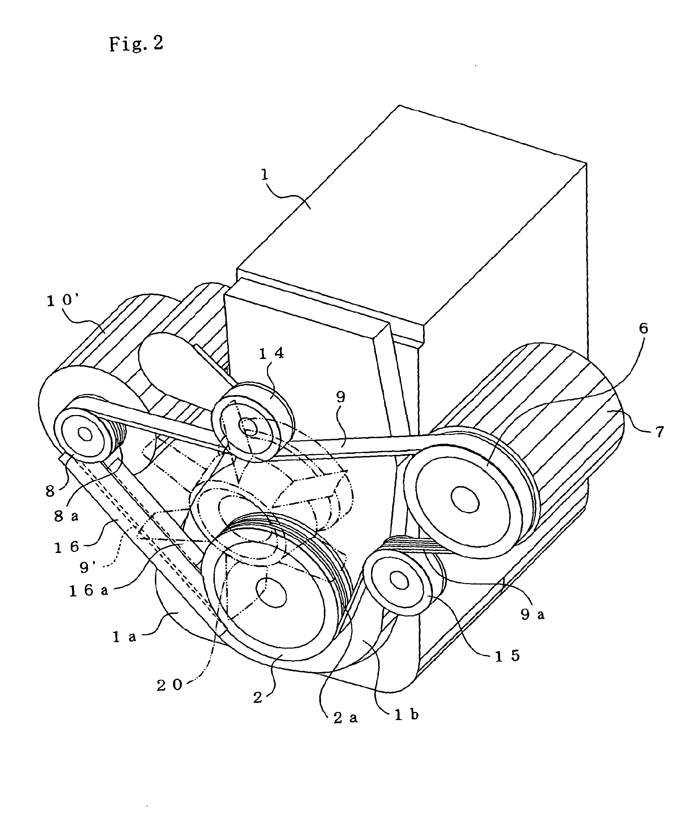

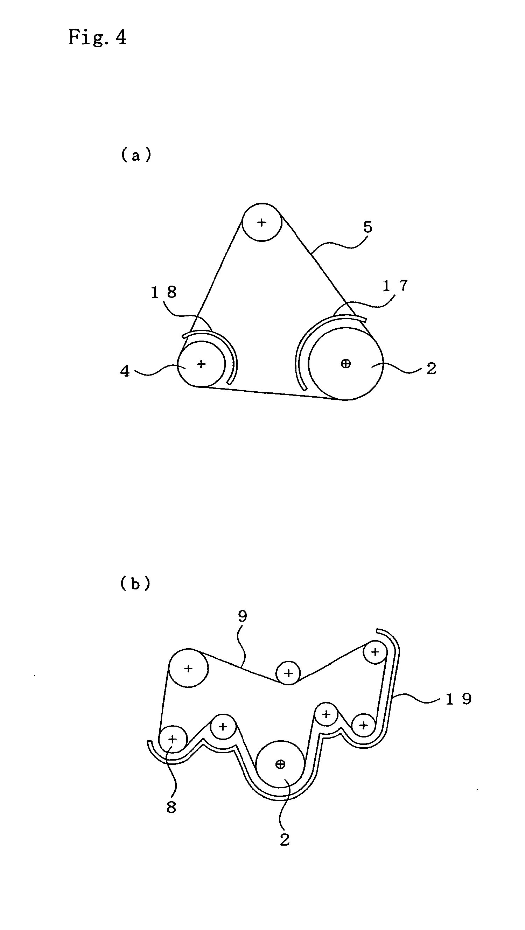

Another device (for example, patent document 2) is proposed, in which an alternator belt for an auxiliary machine is covered together with the crankshaft pulley etc. of an engine overall by a belt cover, which has a hole for the inspection of the belt. Still another device (for example, patent document 3) is proposed, in which ribs are formed between a crank pulley and the section of a belt that is coming in engagement with the pulley, and between an auxiliary machine pulley and the section of the belt that is coming in engagement with this pulley. Each of the ribs has an inclined surface and prevents foreign substances from being pinched between the associated pulley and belt section.
Patent document 1: Japanese patent publication (before examination) H9-172753 (paragraphs 0021 and 0023 and FIG. 1)
Patent document 2: Japanese utility model publication (before examination) H5-42647 (paragraphs 0020 - 0022 and FIGS. 2 and 4)
Patent document 3: Japanese patent publication (before examination) 2003-74370 (paragraphs 0010, 0012 and 0013 and FIG. 1)

DE 10 057 818 discloses a starting device with a belt, DE 3 631 517 discloses a cover.

### DISCLOSURE OF THE INVENTION

### PROBLEM INTENDED TO BE SOLVED BY THE INVENTION

In order to start an engine by transmitting the torque of an electric motor to the crankshaft of the engine through a belt in place of gear drive, as stated above, it may be conceivable to transmit the rotation of the motor to the crankshaft through an auxiliary machine belt. The auxiliary machine belt that goes through the pulleys for driving various auxiliary machines is positioned in front of the engine. The main reason for this is to cool the belt with the air flowing into the engine room while the automobile is running.

If an automobile is parked for a long time particularly in a cold district, the surfaces of the pulleys or the inner side of the auxiliary machine belt may freeze, so that the belt may slip on the pulleys. This prevents the engine from being started by the auxiliary machine belt. For example, rainwater or snow on a road may splash the auxiliary machine belt or pulleys. The wet belt or pulleys may be cooled and frozen while the automobile is parked.

The present invention has been made in view of the foregoing points, and its object is to provide an engine-starting device that can start the engine of an automobile reliably by belt-driving the engine by means of an electric motor even after the automobile is parked for a long time in a cold district or the like.

### MEANS FOR SOLVING THE PROBLEM

In order to achieve the foregoing object, a belt-driven engine-starting device according to the present invention is a device for starting an engine by rotating the crankshaft of the engine by means of an electric motor such as an engine starter or a generator-motor (an alternator, which functions as a motor when current flows through it), a friction drive belt such as an engine-starting belt or an auxiliary machine belt, and pulleys, the device characterized in that at least part of the friction drive belt and/or the pulleys is fitted with a cover for freezing prevention.

The cover for freezing prevention is fitted over a section of the friction drive belt and the pulleys on which water drops or snow may fall while the automobile is running. This prevents water drops or snow from falling easily on the belt or the pulleys. As a result, even after the automobile is parked for a long time in a cold district or the like where the temperature falls below the freezing point, it is possible to start the engine reliably by rotating the crankshaft at a speed necessary for starting the engine by rotating the pulley of the electric motor and transmitting the torque of the motor to the pulley of the crankshaft through the friction drive belt. The cover for freezing prevention is fitted only over the belt section or the pulley section. The other sections of the belt and pulleys are exposed so that the belt and the pulleys can be cooled sufficiently by the air flowing in while the automobile is running after the engine starts. This makes it possible to prevent the thermal degradation of the belt and pulleys due to temperature rises. In particular, because the crank pulley is rotated by means of belt drive to start the engine, the engine starts very well and silently in comparison with the conventional starter gear drive.

As set forth in claim 2, the engine block of the engine may be fitted with arcuate covers covering upper sections of the peripheries of the drive shaft pulley (motor pulley) of the electric motor and the pulley (crank pulley) of the crankshaft.

Because the arcuate covers cover the motor pulley and the crank pulley, raindrop s and snow do not fall easily on the pulleys. This enables the rotation of the motor pulley to drive the friction drive belt and transmit torque to the crank pulley, so that the engine starts reliably, even if the pulleys are exposed to wind or rain while the automobile is parked for a long time, or even if snow lies on the pulleys while the automobile is parked for a long time.

As set forth in claim 3, it is preferable that the friction drive belt should have ribs formed on its inner side and continuing circumferentially of it, that the pulleys should have rib grooves for engaging with the ribs of the belt, and that a cover should be fitted over at least one of a section of the belt the ribbed side of which is the upper side of the section and a section of the pulleys where the rib grooves open upward.

The ribs increase the contact area between the belt and each of the pulleys, so that the coefficient of friction is high. The cover prevents raindrops and snow from falling on the ribbed side of the belt. This makes it possible to start the engine smoothly by rotating the electric motor and driving the belt after the automobile is parked for a long time in a cold district.

As set forth in claim 4, it is preferable that an upper part of the cover be inclined downward away from the engine.

Not only the rainwater but also the snow falling on the cover slips down on the inclined upper part of the cover away from the engine, without staying on the cover. As a result, the pulleys and the belt are prevented from freezing.

As set forth in claim 5, the cover may be positioned in a cooling air passage in an engine room.

The cover positioned in the cooling air passage prevents the raindrops or snow blowing in with the air flowing into the engine room from staying on the belt and the pulleys.

As set forth in claim 6, it is preferable that the cover should have an opening or a slit fitted with a net that is air-permeable and not water-permeable.

When the temperature of the engine room is high after the engine starts, the air flowing in through the opening or slit of the cover cools the belt section or pulley section covered with the cover. This prevents the temperature of the covered section from rising greatly.

As set forth in claim 7, the surfaces of the pulleys may be treated for water repellency and coated with resin, or the pulleys may be resinous.

Even if snow or rainwater falls on the pulley surfaces treated for water repellency, it forms drops of water. Because the drops of water fall from the pulleys when the pulleys rotate, the drops are not liable to stay on the p ulleys. The pulleys coated with resin or the resinous pulleys are low in thermal conductivity, so that they do not cool down quickly even if the engine cools down. Accordingly, the raindrops or the like on the coated or resinous pulleys do not freeze easily. In particular, if the pulleys are formed of thermosetting resin, their abrasive resistance is improved greatly, so that they are suitable as starter pulleys and crank pulleys, the torque of which is high. As a result, the pulleys are prevented from freezing at low temperatures, so that their coefficients of friction with respect to the belt are inhibited from lowering.

### ADVANTAGES OF THE INVENTION

A belt-driven engine-starting device according to the present invention has the following advantages. The device starts an engine by means of an electric motor such as an engine starter or a generator-motor, a friction drive belt, and pulleys. The structure of the device is such that drops of water and snow are not liable to fall on the belt or the pulleys. In particular, even after the automobile is parked for a long time in a cold district or the like where the temperature falls below the freezing point, the device can start the engine reliably by transmitting the rotation of the electric motor to the crankshaft so as to rotate the crankshaft at a speed necessary for starting the engine. The belt drive is silent and enables the engine to rotate and start smoothly. Accordingly, there is no need for a vehicle fitted with a belt-driven engine-starting device to be fitted with a conventional gear-driven engine-starting device. Thus, the device is very effective as a starting device for an automobile of which the engine stops without idling every time the automobile brakes for a traffic light or another reason.

### BEST MODE OF THE INVENTION

Embodiments of a belt-driven engine-starting device according to the present invention will be described below with reference to the drawings.

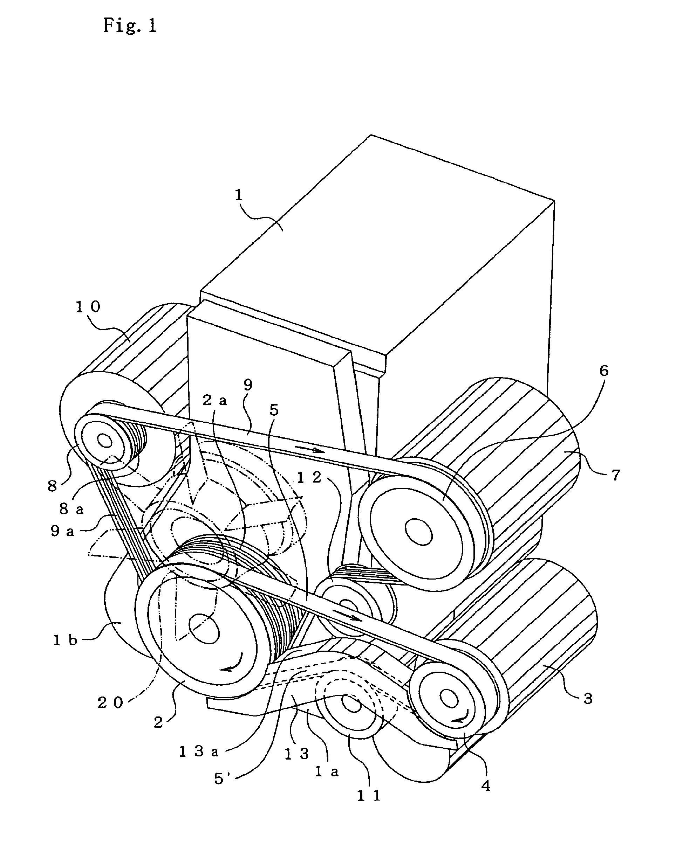

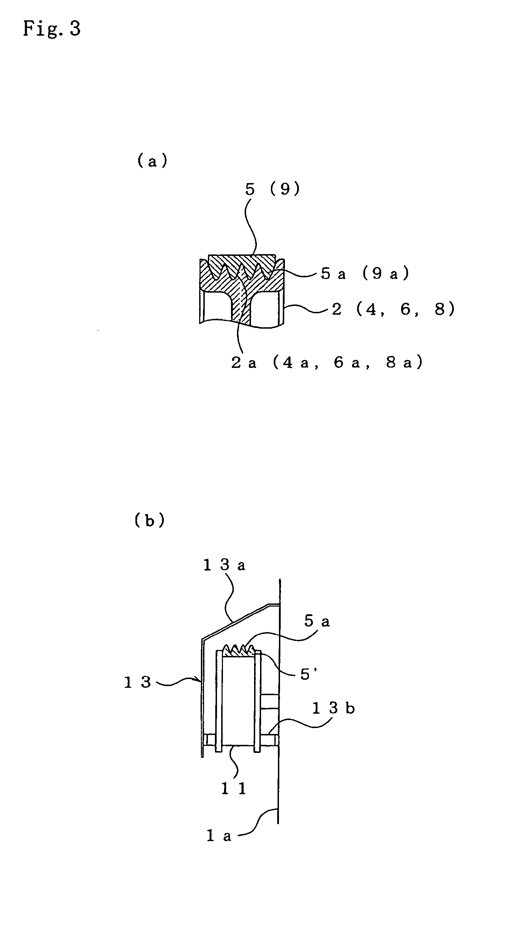

FIG. 1 is a perspective view schematically showing an embodiment of the belt-driven engine-starting device. With reference to FIG. 1, an engine 1 is fitted with a crank pulley 2 (fitted on the front end of the crankshaft) and an engine starter 3. The crank pulley 2 is positioned at the bottom of the front side of the engine 1. The engine starter 3 is fixed to the bottom of the left side of the engine 1 and has a pulley 4, which is connected to the crank pulley 2 by an endless engine-starting belt 5. The belt 5 has circumferentially (longitudinally) continuous ribs 5a formed on its inner side. The crank pulley 2 and starter pulley 4 have rib grooves 2a and 4a, respectively, for the ribs 5a. The crank pulley 2 is wide, and its rib grooves 2a are formed over its whole width for the ribs 9a of an auxiliary machine belt 9 as well, which will be described later on. Pulleys 6 and 8, which will be described later on, have rib grooves 6a and 8a, respectively (FIG. 3(a)).

An air conditioner compressor 7 is fixed to an upper portion of the left side of the engine 1. An alternator 10 is fixed to a vertically middle portion of the right side of the engine 1. The ribbed endless auxiliary machine belt 9 goes through the pulley 6 of the compressor 7, the pulley (motor pulley) 8 of the alternator 10, and the crank pulley 2. The engine 1 is also fitted with an automatic tensioner 11 for the engine-starting belt 5 and an idle pulley 12 for the auxiliary machine belt 9. In particular, because the automatic tensioner 11 increases the tension of the engine-starting belt 5, the tensioner 11 is important in transmitting the torque of the starter pulley 4 to the crank pulley 2.

When the engine 1 is started with the engine key, the engine starter 3 rotates, and its torque is transmitted to the crank pulley 2 by the belt 5. While the automobile is running after the engine 1 starts, there is a case where the brake is applied to stop the automobile for a traffic light. When the automobile brakes, the idling of the engine 1 stops. Thereafter, when the brake is released, the engine 1 starts automatically. Even when the engine 1 thus starts automatically, the engine starter 3 rotates, and its torque is transmitted to the crank pulley 2 by the belt 5.

In consideration of the engine-starting device, the following measures are taken for the belt drive system for the engine starter 3. A belt cover 13 is fitted between the crank pulley 2 and starter pulley 4. The belt cover 13 covers the section 5' of the belt 5 that is moved from the starter pulley 4 to the crank pulley 2 by the rotation of the starter pulley 4. The inner side of the belt section 5', which has ribs 5a, is the upper side of this section. In this embodiment, the belt section 5' is adjacent to the automatic tensioner 11. The belt cover 13 also covers halves of lower portions of these pulleys 2 and 4.

In front view, the belt cover 13 takes the form of a roof along the belt section 5'. The belt cover 13 has an integral structure covering the upper and front sides of the belt section 5' and the front sides of lower portions of the pulleys 2 and 4. The belt cover 13 is supported by stays 13b (FIG. 3). One end of each stay 13b is fixed to the engine block 1a or timing belt cover 1b, and the stays 13b extend forward.

The belt cover 13 covers only the section 5' of the belt 5 to keep only this section from being wetted with water. The belt section 5' is a lower section of the belt 5. The belt section 5' extends at relatively small angles with the horizon, and its V-grooves open upward. The belt section 5' is positioned near the crank pulley 2 as the pulley positioned lowest of the pulleys through which the belt 5 goes.

The front part of the belt cover 13 is vertical, and the upper part 13a of this cover is partially horizontal and partially angled with the horizon. The belt cover 13 is roughly L-shaped in section. The front part of the belt cover 13 covers the front side of the belt section 5' at least near the crank pulley 2. The upper part 13a of the belt cover 13 covers the upper side of the belt section 5' at least near the crank pulley 2. The upper side of the belt section 5' have V-grooves. The belt cover 13 could have three or four sides in section.

In general, the engine 1 is started by being gear-driven by an engine starter. In this embodiment, because the engine 1 is started by being belt-driven, it is started more smoothly and silently. In FIG. 1, the cooling fan 20 is shown with two-dot chain lines, but the components that are not related to the engine-starting device are omitted, as is the case with FIG.2.

For example, if the belt 5 or the pulley 2 or 4 is wet after the automobile is parked in a cold district for a long time, the belt or the pulley may freeze. In this case, when the engine starter 3 rotates, the belt 5 may slip on the pulley 2 or 4, so that the engine 1 may not be able to start. In this embodiment, when the starter pulley 4 starts to rotate, the inner side of the belt section 5' moves first toward the crank pulley 2. The belt cover 13 covers the belt section 5' to prevent rain or snow, with which the section 5' may freeze, from falling on the section 5'.

The belt cover 13 covers the belt section 5', which moves first toward the crank pulley 2 when the starter pulley 4 starts to rotate. This prevents the belt section 5' from freezing. Accordingly, even if the engine 1 is started by rotating the crank pulley 2 through the belt 5 by rotating the engine starter 3 with the engine key after the automobile is parked in a cold district or the like for a long time, the torque of the engine starter 3 is transmitted to the crank pulley 2 to start the engine 1. After the engine 1 starts, the auxiliary machine belt 9, which goes through the crank pulley 2, rotates even though it is not covered. Even if rain or snow falls on the auxiliary machine belt 9 while the automobile is running, it is thrown off the belt 9. While the automobile is running, the temperature of its engine room rises. Accordingly, even if the auxiliary machine belt 9 or the pulley 6 or 8 through which it goes has frozen before the automobile runs, the freeze melts soon while the automobile is running.

FIG. 2 is a schematic perspective view of another embodiment of the belt-driven engine-starting device. In this embodiment, as shown in FIG. 2, the engine starter 3 is omitted, and the engine 1 can be started first with the engine key by an alternator-motor (generator-motor) 10'. A ribbed endless auxiliary machine belt 9 connects the pulley 8 of the alternator-motor 10', the crank pulley 2, and the pulley 6 of the air conditioner compressor 7 together. An automatic tensioner 14 is interposed between the motor pulley 8 and compressor pulley 6. An idle pulley 15 is interposed between the compressor pulley 6 and crank pulley 2. The automatic tensioner 14 and idle pulley 15 cooperate to tension the auxiliary machine belt 9.

The section 9' of the auxiliary machine belt 9 that extends between the motor pulley 8 and the crank pulley 2 is covered with a belt cover 16 to be prevented from freezing. The inner side of the belt section 9 is the upper side of this section. The belt cover 16 is L-shaped in section and covers the upper and front sides of the belt section 9'. In common with the foregoing belt cover 13, the belt cover 16 is supported by the stays extending from the engine block 1a. Otherwise, the structure of the engine-starting device is common to the two embodiments. Therefore, the common components will be assigned the same reference numerals, and the descriptions of them will be omitted.

In this embodiment as well, when the brake is applied to stop the automobile after the engine 1 starts, the idling of the engine 1 stops. When the applied brake is released, the motor 7 rotates automatically. The torque of the motor 7 is transmitted to the crank pulley 2 by the auxiliary machine belt 9 to restart the engine 1.

In order to confirm the effect of the belt cover of the belt-driven engine-starting device according to the present invention, the following test was performed.

### <How to Perform Test>

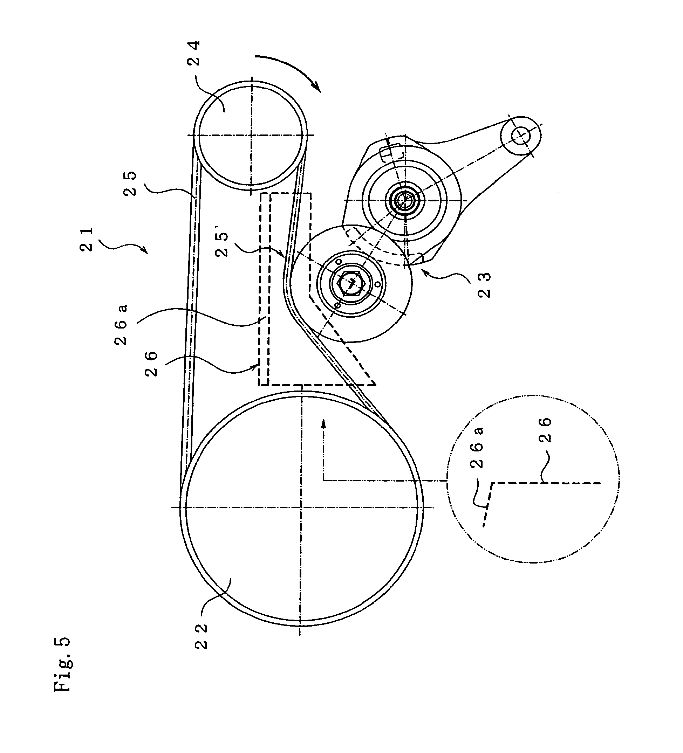

Test Car: As shown in FIG. 5, the engine was fitted with a belt-driven engine-starting device 21, which included a crank pulley 22, an automatic tensioner 23, a starter pulley 24 and a ribbed endless belt 25. The belt 25 connected the pulleys 22 and 24 together. The tensioner 23 pressed a lower section 25' of the belt 25 upward to exert a constant tensile force on it. The belt section 25' was positioned between lower portions of the pulleys 22 and 24. The ribbed side 25a of the belt section 25' was the upper side of this section. As shown in FIG. 5, a belt cover 26 was roughly L-shaped in section and had a roof (top) 26a formed at its top. The roof 26a was inclined slightly downward away from the engine. A comparison of engine starting ability was made between a case where the belt cover 26 was fitted over the belt section 25', which was positioned between the pulleys 24 and 22, and the ribbed side 25a of which was the upper side of this section, and a case where the cover 26 was not fitted.

Test Place: Abashiri City, Hokkaido, Japan
Test Atmosphere: an outside air temperature of -6 degrees C. and an engine oil temperature of -4 degrees C.
Test Method: With the bonnet open, about 1 liter of snow was sprinkled over the belt so that snow fell on the ribbed side of the lower section of the belt. The engine was left as it was for about 30 minutes. Then, the starter pulley 24 was rotated in the direction indicated by an arrow, and it was confirmed whether the engine started or not.

### <Test Results>

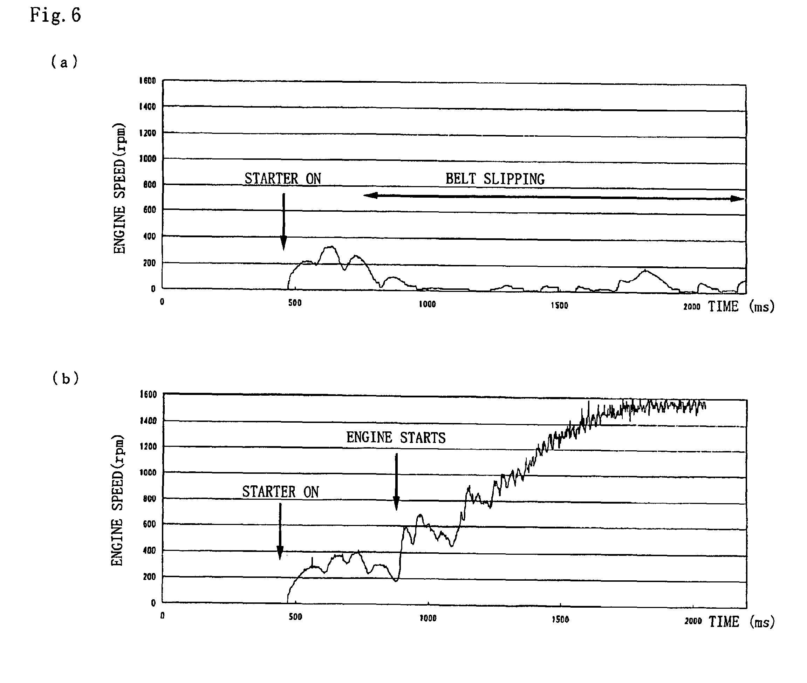

In the case where the belt cover was not fitted (normally), the rotation of the starter pulley 24 did not start the engine, with the belt 25 slipping on the crank pulley 22 (FIG. 6(a)).

In the case where the belt cover was fitted, the rotation of the starter pulley 24 started the engine smoothly, without the belt 25 slipping, even with snow on part of the belt 25 (FIG. 6(b)).

The two embodiments of the belt-driven engine-starting device according to the present invention have been described hereinbefore, but the device may be embodied as follows.

1) For example, as shown in FIG. 3(b), the upper part 13a of the belt cover 13 of the embodiment 1 could be inclined downward away from the engine. This could allow rain or snow, which would otherwise stay on the upper part 13a, to fall immediately.

2) The front part of the belt cover 13 of the embodiment 1 or the belt cover 16 of the embodiment 2 could be a net (not shown) through which snow and water drops cannot pass, but which is air-permeable. Alternatively, the front part of the belt cover 13 or 16 could have slits (not shown) that impede the passage of snow and water drops through them. The net or the slits could expose the belt section 5' or 9' to the cooling air while the automobile is running.

3) In each of the embodiments, the cover for freezing prevention is fitted mainly at the section of the belt 5 or 9 the inner side of which is the upper side. As shown in FIG. 4(a), arcuate covers 17 and 18 could be fitted at the sections of the pulley grooves of the crank pulley 2 and starter pulley 4, respectively, that are out of engagement with the belt. As shown in FIG. 4(b), a continuous cover 19 could cover a lower section of the auxiliary machine belt 9 and lower sections of the pulleys 2 and 4. The covers 17-19 could keep out the snow or rain blowing in from below the engine room.

4) For example, the surfaces of the crank pulley 2 and starter pulley 4 could be treated for water repellency (not shown) to repel rain and snow. If the pulleys 2 and 4 are metallic and high in thermal conductivity, their surfaces may be coated with a resin low in thermal conductivity (not shown) so that the raindrops having fallen on the pulley surfaces at low temperatures cannot freeze easily. The metallic pulleys may be replaced with resinous pulleys low in thermal conductivity (not shown).

5) Until the engine 1 starts, the auxiliary machine belt 9 etc. could be covered by a belt cover (not shown). Once the engine 1 has started, the belt cover could be opened so that the auxiliary machine belt 9 etc. could be cooled.

### BRIEF DESCRIPTION OF THE DRAWINGS

FIG. 1 is a perspective view schematically showing an embodiment of a belt-driven engine-starting device according to the present invention.
FIG. 2 is a perspective view schematically showing another embodiment of the belt-driven engine-starting device according to the present invention.
FIG. 3(a) is a partially sectional view showing on an enlarged scale how the ribs of a belt engage with the rib grooves of a pulley. FIG. 3(b) is a sectional view showing another embodiment of the belt cover.
FIGS. 4(a) and 4(b) are schematic front views showing embodiments in which an auxiliary machine belt and pulleys are fitted with covers.
FIG. 5 is a front view showing an engine-starting device and a left side view showing a belt cover 26.
FIG. 6(a) is a diagram (the relation between engine speed and starting time) showing the results of an engine starting ability test performed when the belt cover was not fitted. FIG. 6(b) is a diagram (the relation between engine speed and starting time) showing the results of an engine starting ability test performed when the belt cover was fitted.

### REFERENCE NUMERALS

1: engine
2, 22: crank pulley
3: engine starter
4. 24: starter pulley
5, 25: engine-starting belt
6, 8: pulley
7: air conditioner compressor
9: auxiliary machine belt
10: alternator
10': alternator-motor (generator-motor)
11: automatic tensioner for belt 5
12: idle pulley for auxiliary machine belt 9
13, 16: belt cover
23: automatic tensioner for belt 25
26: belt cover

## Claims

1. A belt-driven engine-starting device for starting an engine (1) by rotating the crankshaft of the engine (1) by means of an electric motor such as an engine starter (3) or a generator-motor, a friction drive belt (5, 25) such as an engine-starting belt or an auxiliary machine belt, and pulleys (2, 4, 22, 24), the device being **characterized in:**
**that** the engine block or timing belt cover of the engine (1) supports a cover (13, 16) for freezing prevention, the cover (13, 16) covering only part of the friction drive belt (5, 25) and the pulleys (2, 4, 22, 24);
**that** the cover (13, 16) covers a section (5', 25') of the belt (5, 25), that is moved from the starter pulley (4, 24) to the crank pulley (2, 22) by the rotation of the starter pulley (4, 24) and in which the friction drive surface (5a) of which faces upward; and
**that** the cover (13, 16) for freezing prevention also covers halves of lower portions of starter pulley (4, 24) and the crank pulley (2, 22).

2. The belt-driven engine-starting device as set forth in claim 1; wherein the friction drive belt has a plurality of ribs formed on the inner side thereof, the ribs continuing circumferentially of the belt, the pulleys having rib grooves for engaging with the ribs; and wherein the span is a section of the belt the ribbed inner side of which faces upward.

3. The belt-driven engine-starting device as set forth in claim 1 or 2, wherein arcuate covers are fitted at sections of the driving shaft pulley and the crankshaft pulley where the pulley grooves are exposed from the belt.

4. The belt-driven engine-starting device as set forth in any one of claims 1 to 3, wherein an upper part of the cover is inclined forward and downward.

5. The belt-driven engine-starting device as set forth in any one of claims 1 to 4, wherein the cover is positioned in the cooling air passage in the engine room of the engine.

6. The belt-driven engine-starting device as set forth in any one of claims 1 to 5, wherein the surfaces of the pulleys are treated for water repellency or coated with resin, or wherein the pulleys are resinous.

## Patentansprüche

1. Eine riemenangetriebene Motorstartvorrichtung zum Starten eines Motors (1) durch Drehen der Kurbelwelle des Motors (1) mit Hilfe eines elektrischen Motors, beispielsweise eines Anlassers (3) oder eines Generator-Motors, eines Reibungsantriebsriemens (5, 25), beispielsweise einem Motorstartriemen oder einem Hilfsmotorriemen, und Riemenscheiben (2, 4, 22, 24), wobei die Vorrichtung **dadurch gekennzeichnet ist:**
**dass** der Motorblock oder die Steuerriemenabdeckung des Motors (1) eine Abdeckung (13, 16) zum Einfrierschutz trägt, wobei die Abdeckung (13, 16) nur einen Teil des Reibungsantriebsriemens (5, 25) und der Riemenscheiben (2, 4, 22, 24) abdeckt;
**dass** die Abdeckung (13, 16) einen Abschnitt (5', 25') des Riemens (5, 25) abdeckt, der von der Starterriemenscheibe (4, 25) zu der Kurbelwellenriemenscheibe (2, 22) durch die Rotation der Starterriemenscheibe (4, 24) bewegt wird und in dem seine Reibungsantriebsfläche (5a) nach oben gerichtet ist; und
**dass** die Abdeckung (13, 16) zum Einfrierschutz auch Hälften der unteren Abschnitte von Starterriemenscheibe (4, 24) und der Kurbelwellenriemenscheibe (2, 22) bedeckt.

2. Die riemengetriebene Motorstartvorrichtung, wie in Anspruch 1; worin der Reibungsantriebsriemen eine Mehrzahl von Rippen aufweist, die auf seiner Innenseite ausgebildet sind, wobei die Rippen sich umfänglich um den Riemen fortsetzen, wobei die Riemenscheibe Rippennuten aufweist für den Eingriff mit den Rippen; und worin der Bereich ein Abschnitt des Riemens ist, bei dem die gerippte innere Seite nach oben weist.

3. Die riemengetriebene Motorstartvorrichtung, wie in Anspruch 1 oder 2, worin bogenförmige Abdeckungen eingepasst sind an Abschnitten der Antriebswellenriemenscheibe und der Kurbelwellenriemenscheibe, wo die Riemenradnuten vom Riemen frei sind.

4. Die riemengetriebene Motorstartvorrichtung, wie in einem der Ansprüche 1 bis 3, worin ein oberer Teil der Abdeckung vorwärts und nach unten geneigt ist.

5. Die riemengetriebene Motorstartvorrichtung, wie in einem der Ansprüche 1 bis 4, worin die Abdeckung in dem Kühlluftstrom in dem Motorraum des Motors angeordnet ist.

6. Die riemengetriebene Motorstartvorrichtung, wie in einem der Ansprüche 1 bis 5, worin die Oberflächen der Riemenscheiben behandelt worden sind zum Wasser abstoßen oder beschichtet sind mit Harz oder worin die Riemenscheiben aus Harz gebildet sind.

## Revendications

1. Dispositif de démarrage entraîné par courroie, conçu pour démarrer un moteur (1) en imprimant une rotation au vilebrequin dudit moteur (1) au moyen d'un moteur électrique tel qu'un démarreur (3) dudit moteur, ou un alterno-démarreur, au moyen d'une courroie (5, 25) d'entraînement par friction telle qu'une courroie de démarrage du moteur, ou une courroie motrice auxiliaire, et au moyen de poulies (2, 4, 22, 24), ledit dispositif étant **caractérisé par le fait :**
**que** le bloc-moteur ou le couvercle de la courroie de distribution supporte une coiffe (13, 16) de prévention contre le gel, ladite coiffe (13, 16) recouvrant uniquement une partie des poulies (2, 4, 22, 24) et de la courroie (5, 25) d'entraînement par friction ;
**que** ladite coiffe (13, 16) recouvre un tronçon (5', 25') de ladite courroie (5, 25) qui est mis en mouvement depuis la poulie (4, 24) du démarreur jusqu'à la poulie (2, 22) du vilebrequin, sous l'effet de la rotation de ladite poulie (4, 24) du démarreur, et dont la surface (5a) d'entraînement par friction est orientée vers le haut ; et
**que** ladite coiffe (13, 16) de prévention contre le gel recouvre également des moitiés de régions inférieures de ladite poulie (4, 24) du démarreur et de ladite poulie (2, 22) du vilebrequin.

2. Dispositif de démarrage de moteur à entraînement par courroies, selon la revendication 1, dans lequel la courroie d'entraînement par friction comporte une pluralité de nervures ménagées sur sa face intérieure, lesdites nervures s'étendant de manière continue sur la circonférence de ladite courroie, les poulies étant munies de rainures dévolues à la venue en prise avec lesdites nervures ; et dans lequel la portée est un tronçon de ladite courroie dont la face intérieure nervurée est orientée vers le haut.

3. Dispositif de démarrage de moteur à entraînement par courroies, selon la revendication 1 ou 2, dans lequel des coiffes curvilignes sont installées au niveau de tronçons de la poulie de l'arbre d'entraînement, et de la poulie du vilebrequin, sur lesquels les rainures desdites poulies sont en vis-à-vis de la courroie.

4. Dispositif de démarrage de moteur à entraînement par courroies, selon l'une quelconque des revendications 1 à 3, dans lequel une partie supérieure de la coiffe est inclinée vers l'avant et vers le bas.

5. Dispositif de démarrage de moteur à entraînement par courroies, selon l'une quelconque des revendications 1 à 4, dans lequel la coiffe est agencée dans le passage d'air de refroidissement, dans le compartiment moteur.

6. Dispositif de démarrage de moteur à entraînement par courroies, selon l'une quelconque des revendications 1 à 5, dans lequel les surfaces des poulies sont soumises à un traitement d'imperméabilisation à l'eau, ou sont revêtues de résine ; ou dans lequel lesdites poulies sont de consistance résineuse.
